(19) Europäisches Patentamt
European Patent Office
Office européen des brevets

(11) **EP 2 317 082 A2**

(12) **EUROPEAN PATENT APPLICATION**

(43) Date of publication:
**04.05.2011 Bulletin 2011/18**

(51) Int Cl.:
*F01D 21/00* (2006.01)  *G01M 15/14* (2006.01)
*F01D 5/00* (2006.01)

(21) Application number: **10189000.2**

(22) Date of filing: **27.10.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.10.2009  US 609065**

(71) Applicant: **General Electric Company**
**Schenectady, NY 12345 (US)**

(72) Inventors:
• **Singh, Jagmeet**
  **Greenville, SC 29615 (US)**
• **Hoyte, Scott Mordin**
  **Greenville, SC 29615 (US)**
• **Pandey, Achalesh Kumar**
  **Greenville, SC 29615 (US)**

(74) Representative: **Gray, Thomas**
**GE International Inc.**
**Global Patent Operation - Europe**
**15 John Adam Street**
**London WC2N 6LU (GB)**

(54) **Turbine life assessment and inspection system and methods**

(57)    A system for creating an inspection or part replacement recommendation for a unit forming a part of a fleet includes an assessment module (64) that receives inputs from at least one portion of at least one turbine (60) and produces an inspection recommendation (70). The assessment module includes a health assessment module (301) that creates a risk of event estimate based on the inputs and historical operations data and a performance analyzer (316) coupled to the health assessment module that creates the inspection or part replacement recommendation based on the risk of event estimate and information related to a cost.

FIG. 1

**Description**

**BACKGROUND OF THE INVENTION**

The subject matter disclosed herein relates to turbines and, in particular, to when to inspect turbines and when to replace various component of turbine.

Electrical power generation typically includes the utilization of one or more turbines. These turbines, like any other mechanical device, may need inspection from time to time to ensure proper operation. One approach has been to have periodic inspections. In some cases, however, it may be determined that particular turbines (or portions thereof) may not need to be inspected as often as others even if they are of the same type. Thus, an inspection may not be necessary for one turbine while it may be for another. One factor that may influence such decisions is based on environmental conditions where the turbine is located.

High availability and reliability of power generation systems has been a major requisite of the electric utility industry for many years. The high cost of unreliability and forced outages is well known. Improper maintenance or operational anomoly detection may lead to turbine-forced outages. Early detection of such anomolies is important in preventing and reducing lengthy turbine forced outages.

A typical inspection may require that a turbine be shut down during the inspection. In such a case, at least a portion of a power generation plant's production capability may be hampered. Reducing the ability to generate power may have real economic costs associated with it. In addition, the inspection itself costs money. For at least these two reasons, it may be beneficial to perform inspections only when needed.

BRIEF DESCRIPTION OF THE INVENTION

According to one aspect of the invention, a system for creating an inspection recommendation or part replacement recommendation for a unit forming a part of a fleet is provided. The system of this aspect includes an assessment module that receives inputs from at least one portion of at least one turbine and produces an inspection recommendation or part replacement recommendation. The assessment module includes a health assessment module that creates a risk of event estimate based on the inputs and historical operations data and a performance analyzer coupled to the health assessment module that creates the inspection recommendation based on the risk of event estimate and information related to a cost.

According to another aspect of the invention, a method of forming a unit inspection recommendation for a unit forming a part of a fleet is provided. The method of this aspect includes receiving inputs at an assessment module from at least one portion of at least one turbine; forming at a health assessment module a risk of event estimate based on the inputs and historical operations data; and creating the inspection recommendation based on the risk of event estimate and cost information.

These and other advantages and features will become more apparent from the following description taken in conjunction with the drawings.

**BRIEF DESCRIPTION OF THE DRAWINGS**

There follows a detailed description of embodiments of the invention by way of example only with reference to the accompanying drawings, in which:

Fig. 1 is data flow diagram showing a system according to an embodiment of the present invention;

Fig. 2 shows a computing system on which embodiments of the present invention may be implanted;

Fig. 3 is more detailed dataflow diagram for the system shown in Fig. 1; and

Fig. 4 shows a method according to an embodiment of the present invention.

**DETAILED DESCRIPTION OF THE INVENTION**

Embodiments disclosed herein may provide life assessment, asset planning and inspection recommendations using some or all of field data, operational profile, site conditions, hardware configuration, inlet conditioning, sensor information, reliability models, expert rules, classifiers and multivariate statistical techniques. In utilizing the systems or implementing the methods disclosed herein, accurate inspect of units may be planned and it may also increase the availability of the units in the fleet.

In particular, inspection recommendations may be based on information fusion of risk models and hardware configurations. The system can provide more accurate inspection recommendations and prevent unplanned outage in the field. Using the invention disclosed herein may also allow for the improvement of turbine life based on operating profile changes. In addition, tracking particular failures or risks may allow for determination that additional devices are needed for proper turbine operation. For example, inlet air filtration systems may be needed for turbines operating in high-risk geographic regions.

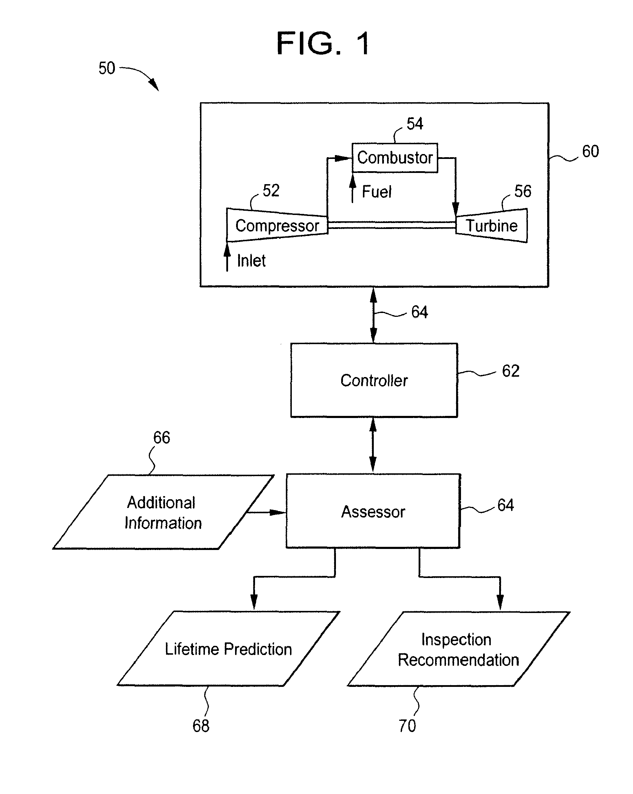

Fig. 1 shows a dataflow diagram of a system 50 according to one embodiment. The system 50 may include one or more turbines 60. The turbine 60 may be any type of type of turbine. In one embodiment, the turbine 60 may be a gas turbine.

In the event the turbine 60 is a gas turbine, the turbine 60 may include a compressor 52 to draw in and compress air; a combustor 54 (or burner) to add fuel to heat the compressed air; and a turbine 56 to extract power from the hot air flow. The gas turbine is an internal combustion (IC) engine employing a continuous combustion process. The following description may focus on the compressor 42. However, it shall be understood that the teachings herein are not so limited and may be applied, for example, to any portion of the turbine 60.

The system 50 may also include a controller 62 coupled to the turbine 60. The controller 62 receives information from the turbine 60 and, based on that information, may vary the operation of the turbine 60. Accordingly, the communication between the controller 62 and the turbine 60 may be bidirectional as indicated by communication pathway 64.

The controller 62 is coupled to an assessor 64. In one embodiment, the assessor 64 receives information from the controller 62 and additional information 66 from additional information sources (not shown) to produce one or both of a lifetime prediction 68 and an inspection recommendation 70.

The additional information 66 may include, but is not limited to, on-site monitoring information. In one embodiment, the on-site monitoring information is related to the compressor 52. This on-site monitoring information may include, but is not limited to, hours of operation, inlet conditioning, fogger information, part load operation, water wash information, inlet air quality and other sensor information. The additional information 66 could also include information related to a cost of one or more possible inspections and the cost (either actual or estimated) of a particular event, such as but not limited to, a failure or unplanned outage (hereinafter "event").

The assessor 64 may be implemented in hardware, software, or some combination thereof (firmware). The assessor 64 receives the information from the controller 62 and the additional information 66. The additional information 66 is discussed in greater detail below.

As an intermediary step, the assessor may produce a risk of event, damage indicator or an alarm for the turbine 60 based on the received information. These intermediary values may be utilized to determine if the cost of inspection or cost of part replacement outweighs the cost of an outage to create an inspection or replacement recommendation 70. In the event that the cost of inspection or cost of part replacement outweighs the cost of an outage times the likelihood of an outage, the inspection recommendation may be to not perform an inspection. In the event that the cost of inspection or cost of part replacement is less than the cost of an outage times the likelihood of an outage, the inspection recommendation may be to perform an inspection. Also, the assessor 64 may produce a lifetime prediction 68 from the information it has received. For example, in some instances, the model parameters 314 may indicate that the unit (or particular portion) is nearing the end of its projected lifecycle. In such a case, the assessor 64 may determine that the lifetime remaining is a percentage of the total projected lifecycle.

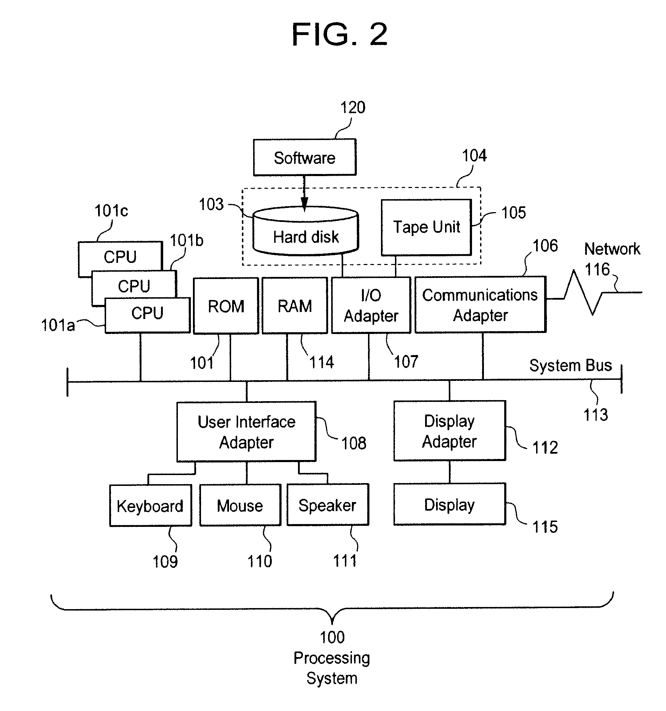

Referring to Fig. 2, there is shown an embodiment of a processing system 100 for implementing the teachings herein. The processing system 100 may include the assessor 64 (Fig. 1). In this embodiment, the system 100 has one or more central processing units (processors) 101 a, 101b, 101c, etc. (collectively or generically referred to as processor (s) 101). In one embodiment, each processor 101 may include a reduced instruction set computer (RISC) microprocessor. Processors 101 are coupled to system memory 114 and various other components via a system bus 113. Read only memory (ROM) 102 is coupled to the system bus 113 and may include a basic input/output system (BIOS), which controls certain basic functions of system 100.

Fig. 2 further depicts an input/output (I/O) adapter 107 and a network adapter 106 coupled to the system bus 113. I/O adapter 107 may be a small computer system interface (SCSI) adapter that communicates with a hard disk 103 and/or tape storage drive 105 or any other similar component. I/O adapter 107, hard disk 103, and tape storage device 105 are collectively referred to herein as mass storage 104. A network adapter 106 interconnects bus 113 with an outside network 116 enabling data processing system 100 to communicate with other such systems. A screen (e.g., a display monitor) 115 can be connected to system bus 113 by display adaptor 112, which may include a graphics adapter to improve the performance of graphics intensive applications and a video controller. In one embodiment, adapters 107, 106, and 112 may be connected to one or more I/O busses that are connected to system bus 113 via an intermediate bus bridge (not shown). Suitable I/O buses for connecting peripheral devices such as hard disk controllers, network adapters, and graphics adapters typically include common protocols, such as the Peripheral Components Interface (PCI). Additional input/output devices are shown as connected to system bus 113 via user interface adapter 108 and display adapter 112. A keyboard 109, mouse 110, and speaker 111 are all interconnected to bus 113 via user interface adapter 108, which may include, for example, a Super I/O chip integrating multiple device adapters into a single integrated circuit.

Thus, as configured in Fig. 2, the system 100 includes processing means in the form of processors 101, storage means including system memory 114 and mass storage 104, input means such as keyboard 109 and mouse 110, and output means including speaker 111 and display 115. In one embodiment, a portion of system memory 114 and mass storage 104 collectively store an operating system to coordinate the functions of the various components shown in Fig. 2.

It will be appreciated that the system 100 can be any suitable computer or computing platform, and may include a terminal, wireless device, information appliance, device, workstation, mini-computer, mainframe computer, personal digital assistant (PDA) or other computing device. It shall be understood that the system 100 may include multiple computing devices linked together by a communication network. For example, there may exist a client-server relationship between two systems and processing may be split between the two.

Any computer operating system may be utilized by the system 100 The system 100 also includes a network interface 106 for communicating over a network 116. The network 116 can be a local-area network (LAN), a metro-area network (MAN), or wide-area network (WAN), such as the Internet or World Wide Web.

Users of the system 100 can connect to the network through any suitable network interface 116 connection, such as standard telephone lines, digital subscriber line, LAN or WAN links (e.g., T1, T3), broadband connections (Frame Relay, ATM), and wireless connections (e.g., 802.11(a), 802.11(b), 802.11(g)).

As disclosed herein, the system 100 may include machine-readable instructions stored on machine readable media (for example, the hard disk 104) to execute one or more methods disclosed herein. As discussed herein, the instructions may be referred to as "software" 120. The software 120 may be produced using software development tools as are known in the art. The software 120 may include various tools and features for providing user interaction capabilities as are known in the art.

In some embodiments, the software 120 is provided as an overlay to another program. For example, the software 120 may be provided as an "add-in" to an application (or operating system). Note that the term "add-in" generally refers to supplemental program code as is known in the art. In such embodiments, the software 120 may replace structures or objects of the application or operating system with which it cooperates.

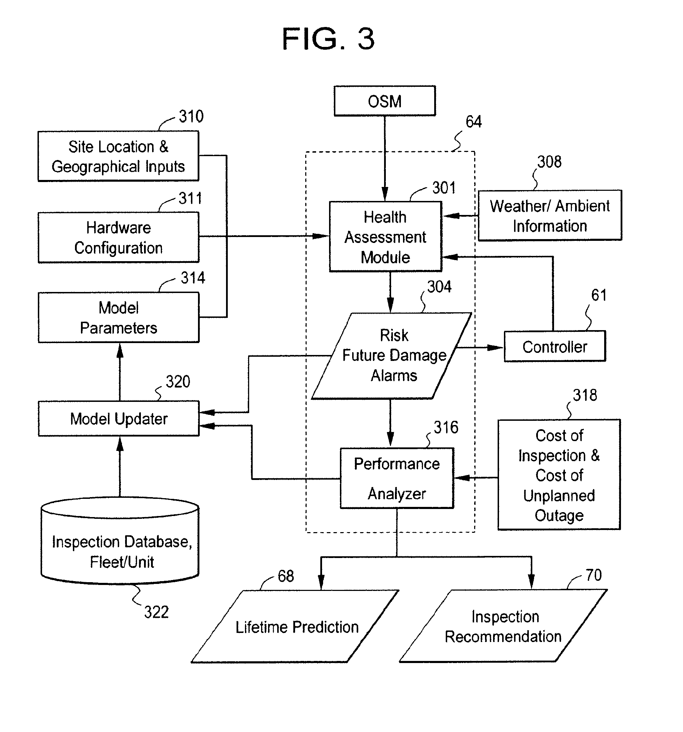

Fig. 3 is a more detailed depiction than that shown in Fig. 1 of a system 300 that may produce one or both of an inspection recommendation 70 or a lifetime prediction 68.

The system 300 includes an assessor 64 (also referred to as an assessor module). As discussed above, the assessor module 64 receives inputs from a controller 62 and one or more other information sources. From this, and possibly other, information the assessor module 64 produces one or both of an inspection recommendation 70 or a lifetime prediction 68.

In one embodiment, the assessor module 64 may include a health assessment module 302. The health assessment module 302 may receive inputs from one or more information sources and create an intermediary output 304. Generally, the intermediary output 304 may include one or more values including, but not limited to, a risk of event, a probability of future damage and one or more alarms.

The assessor module 64 may be coupled to and receive information from the controller 62. The controller 62 receives information from, for example, a turbine and, based on that information, may vary the operation of the turbine. The controller 62 provides at least some of the information about the operation of the turbine (in particular, the compressor) to the health assessment module. This information may include, but is not limited to, various set points, limits, accumulator values, and the like. The controller 62, in one embodiment, may receive a risk level from the intermediary output 304 that causes one or more of the received (or other) operational values to be changed by the controller 62.

The assessor module 64 may be coupled to and receive information from one or more on-site monitors 304. These monitors may provide values indicative of hours of operation, the number of starts for the turbine, inlet conditioning, fogger/chiller/evaporator/sprits, part load operation, water wash, inlet air quality, and other sensor inputs.

The assessor module 64 may also receive weather/ambient temperature information 308. This information may be from sensors at the turbine or from other sources, such as, for example, a weather reporting service or a webpage. Regardless, this information may affect any type of analysis because, as is known, weather conditions such as humidity, temperature, and the like may have effects on the operation and lifetime of a turbine.

As discussed above, the system 300 may be coupled to several turbines or locations. Indeed, some locations may include multiple turbines. To that end, for one or more of the turbines, the heath assessment module 302 may receive site location and geographical inputs 310, hardware configuration 312, and model parameters for a fleet 314. The hardware configuration 312 may indicate, in one embodiment, the particular type of turbine and components coupled together including the particular compressor. The model parameters 314 may be historical information recorded from units, such as units that failed or did not fail and the inspection schedule applied in those cases. As discussed below, the model parameters 314 may be altered over time based on the operation of the system disclosed herein.

The intermediary values 304 may include output connections to the controller 62. For example, the alarm condition or risk of event may be utilized by the controller 62 to vary operation of the turbine and the compressor in particular.

The intermediary values 304 may also include an output to a performance analyzer 316. The performance analyzer 316 takes the intermediary values 304 and, in combination with cost information 318, determines one or both of a lifetime prediction 68 or an inspection recommendation. The cost information 318 may be the cost of one or more possible inspections and the cost (either actual or estimated) of a particular unplanned outage. An outage may be a partial outage, or a part-repair outage or a part-replacement outage.

For example, in the event that the cost of inspection as received from cost information 318 outweighs the cost of an outage times the likelihood of an outage (e.g. the risk as represented in the intermediary values 304) the inspection recommendation 70 may be to not perform an inspection. In the event that the cost of inspection is less than the cost of an outage times the likelihood of an outage, the inspection recommendation 70 may be to perform an inspection. Also, the performance analyzer 316 may produce a lifetime prediction 68 from the information it has received.

Both the intermediary values 304 and one or more of the outputs produced by the performance analyzer 316 may be provided to a model updater 320. The model updater 320 may include one or more updating algorithms that based on the intermediary values 304, the performance analyzer 316 outputs and data in an inspection database 322 may update the model parameters 314. In this manner, the model parameters 314 may be updated dynamically to more accurately represent the system as its operational parameters vary over time.

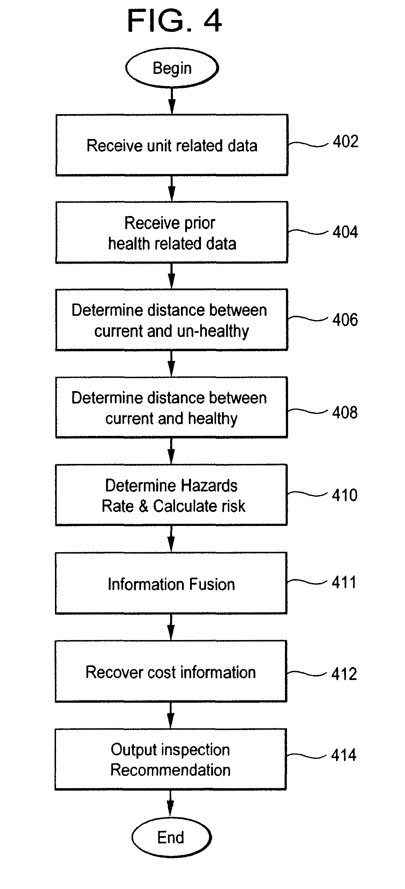

Fig. 4 is flow chart showing method of creating an inspection recommendation according to one embodiment. In this example, certain observable operational values related to a turbine compressor are used. Of course, other values could be used and the teachings herein could be applied to other components of a turbine or any other machine. In one embodiment the assessor 64 may perform the method disclosed in Fig. 4. It shall be understood that the method of Fig. 4 may be periodically run or may run continually.

At a block 402, information or data related to the operation of a particular unit is received. This data may include, but is not limited to, chloride ion wet deposition levels, blade fired hours, blade fired starts, number of hours per start, temperature, relative humidity, and operating hours of inlet air cooling system (e.g evaporator coolers, foggers, sprits, chillers, and on-line and off-line water wash frequency and hours).

At a block 404, prior health related data for unhealthy units and healthy units is received. This information may be stored, for example, in the inspection database 322 and provided as model parameters 314 (Fig. 3). The model parameters may be provided as an individual value or as statistically significant values. For example, the values for both the healthy and unhealthy units could include a mean and covariance matrix for each value of interest.

At a block 406, the distance between the current values and the prior unhealthy information is determined. In one embodiment, such a determination may include performing the following calculations:

$$\text{unhealthy distance (D1)} = (X - X0)' * \text{inv}(S0)*(X-X0);$$

where X is the current information, and X0 is the mean and S0 is the covariance matrix related to unhealthy information.

At a block 408, the distance between the current values and the prior healthy information is determined. In one embodiment, such a determination may include performing the following calculations:

$$\text{healthy distance (D2)} = (X - X1)' * \text{inv}(S1)*(X-X1);$$

where X is the current information, and X is the mean and S1 is the covariance matrix relate to healthy information.

Based on the relative distances calculated at blocks 406 and 408, at a block 410 a risk of event value may be calculated. This value represents the likelihood of event of the unit and is based on the operating conditions actually experienced by the unit. In one embodiment, the risk of event may be created by a comparison of the distances calculated above. Of course, other statistical techniques could be employed.

In one embodiment, the method may include an information fusion block 411. At block 411 the risk information may be fused with other information utilizing, for example, rule based systems. The fusion may include fusing various statistical (Weilbull, proportional hazard, discriminant analysis and the like), semi-empirical and physics based models. Of course, these information sources could be fused utilizing other information fusion algorithms such as Dempster-Shafer, Bayesian fusion, or fuzzy logic.

At a block 412 cost information is received. The cost information may be the cost of one or more possible inspections and the cost (either actual or estimated) of a particular unplanned outage. An outage may be a partial outage, or a part-repair outage or a part-replacement outage.

At a block 414 an inspection recommendation is created and output. For example, in the event that the cost of inspection outweighs the cost of an outage times the likelihood of an outage (e.g. the risk as represented in the intermediary values 304) the inspection recommendation may be to not perform an inspection. In the event that the cost of inspection is less than the cost of an outage times the likelihood of an outage, the inspection recommendation may be to perform an inspection.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

**Claims**

1. A system for creating an inspection or part replacement recommendation for a unit, the system comprising:

    an assessment module (64) that receives inputs from at least one portion of at least one turbine (60) and produces an inspection or part replacement recommendation (70), the assessment module including:

    a health assessment module (301) that creates a risk of event estimate based on the inputs and historical operations data; and
    a performance analyzer (316) coupled to the health assessment module that creates the inspection recommendation based on the risk of event estimate and information related to cost of the event.

2. The system of claim 1, further comprising:

    a controller (61) coupled to the health assessment module that provides at least a portion of the inputs and that controls operation of at least the portion of the at least one turbine.

3. The system of claim 1 or 2, wherein the at least one portion is a compressor (52).

4. The system of claim 3, wherein the inputs include an indication of a chloride ion wet deposition level of the compressor.

5. The system of claim 4, wherein the inputs further include at least one of: a number of fired hours, a number of starts, an average temperature and an average humidity.

6. The system of any of the preceding claims, wherein the information related to cost includes a cost of an unplanned outage and a cost of an inspection.

7. The system of any of the preceding claims, wherein the performance analyzer determines if the unit is closer to a healthy state or an unhealthy state based on the inputs.

8. The system of claim 7, wherein the risk of event is related to the determination if the unit is closer to the unhealthy state.

9. The system of any of the preceding claims, wherein the health assessment module receives model parameters representing historical operation of similar units, the model parameters including a mean value and a covariance matrix for at least one parameter.

10. The system of claim 9, wherein model parameters comprise a chloride ion wet deposition level and other corrosive indicators

11. A method of forming a unit inspection or part replacement recommendation for a unit forming a part of a fleet, the method comprising:

    receiving inputs at an assessment module from at least one portion of at least one turbine;
    forming at a health assessment module a risk of event estimate based on the inputs and historical operations data; and

creating the inspection or part replacement recommendation based on the risk of event estimate and cost information.

12. The method of claim 11, wherein creating includes:

receiving the cost information.

13. The method of claim 11 or 12, wherein the at least one portion is a compressor.

14. The method of claim 13, wherein the inputs include an indication of a chloride ion wet deposition level and other corrosive indicators of the compressor.

15. The method of claim 11, wherein the cost information includes a cost of an unplanned outage and a cost of an inspection.

# FIG. 1

50

# FIG. 2

120

Software

104

103

Hard disk

Tape Unit — 105

101c

CPU

101b

CPU

101a

CPU

ROM

RAM

I/O Adapter

Communications Adapter

106

Network 116

101

114

107

System Bus

113

User Interface Adapter — 108

Display Adapter — 112

Keyboard

Mouse

Speaker

Display

109

110

111

115

100
Processing
System

# FIG. 3

# FIG. 4

Begin

Receive unit related data — 402

Receive prior
health related data — 404

Determine distance between
current and un-healthy — 406

Determine distance between
current and healthy — 408

Determine Hazards
Rate & Calculate risk — 410

Information Fusion — 411

Recover cost information — 412

Output inspection
Recommendation — 414

End